# EUROPEAN PATENT APPLICATION

(11) **EP 4 691 331 A1**
(43) Date of publication of application: **11.02.2026**
(21) Application number: 24777966.3
(22) Date of filing: 25.03.2024
(51) Int. Cl.: A47L 5/12, A47L 9/10, A47L 9/20, A47L 9/00

(54) **VACUUM CLEANER**

(30) Priority: 27.03.2023 CN 202320627540 U
(71) Applicant: Suzhou Cleva Precision Machinery & Technology Co., Ltd., Suzhou, Jiangsu 215000 (CN)
(72) Inventor: BIAN, Xiaoxian, Suzhou, Jiangsu 215000 (CN); LIU, Haiping, Suzhou, Jiangsu 215000 (CN); DAI, Xiong, Suzhou, Jiangsu 215000 (CN); XIA, Liang, Suzhou, Jiangsu 215000 (CN); YU, Jintong, Suzhou, Jiangsu 215000 (CN)
(74) Representative: Murgitroyd & Company
(86) International application number: PCT/CN2024/083543
(87) International publication number: WO 2024/199178

(57) **Abstract**

The present invention belongs to the technical field of vacuum cleaners, and particularly relates to a vacuum cleaner, comprising a first airflow path, a second airflow path, a filtering device, and an airflow guiding assembly. The first airflow path flows from a dirty air inlet to a clean air outlet. The second airflow path flows from a self-cleaning air inlet to the clean air outlet. The filtering device has opposing first and second surfaces. Air in the first airflow path enters the filtering device from the first surface and exits from the second surface before flowing to the clean air outlet. Air in the second airflow path enters the filtering device from the second surface and exits from the first surface, then re-enters from the first surface and exits from the second surface before flowing to the clean air outlet. The airflow guiding assembly is disposed at the intersection of the first airflow path and the second airflow path at the filtering device and is configured to direct air from the self-cleaning air inlet to the second surface. The self-cleaning airflow of this vacuum cleaner has a large flow rate, which can effectively improve the self-cleaning effect.

## Description

### TECHNICAL FIELD

The present invention relates to the technical field of vacuum cleaners, in particular to a vacuum cleaner.

### BACKGROUND

Currently, the self-cleaning function of vacuum cleaners is widely used. A commonly used self-cleaning method is the single air duct self-cleaning method. That is, the filtering device is flushed by an air flow to reverse the dust in the filtering device into the dust collection barrel, thereby completing the self-cleaning of the filtering device.

However, when the self-cleaning air flow flows from the upper side of the filtering device to its lower side, part of the air flow is sucked away by other cavities connected to the space above the filtering device, resulting in a great reduction of the air flow flushing the filtering device, which affects the self-cleaning effect of the filtering device.

Therefore, there is an urgent need for a vacuum cleaner to solve the above problems.

### SUMMARY

The purpose of the present invention is to provide a vacuum cleaner. The self-cleaning air flow of this vacuum cleaner has a large flow rate, which can effectively improve the self-cleaning effect.

To achieve this purpose, the present invention adopts the following technical solution:
A vacuum cleaner, including:
a first air flow path flowing from a dirty air inlet to a clean air outlet;
a second air flow path flowing from a self-cleaning air inlet to the clean air outlet;
a filtering device having opposite first and second surfaces, wherein air in the first air flow path enters from the first surface and flows out from the second surface, then flows to the clean air outlet; air in the second air flow path enters from the second surface and flows out from the first surface, then enters again from the first surface and flows out from the second surface, then flows to the clean air outlet;
the vacuum cleaner further includes:
   an air flow guide assembly disposed at an intersection of the first air flow path and the second air flow path at the filtering device, configured to guide air from the self-cleaning air inlet to the second surface.

As a preferred solution of the vacuum cleaner provided by the present invention, the air flow guide assembly includes a guide member, and the guide member has a hollow interior structure with openings at both ends.

As a preferred solution of the vacuum cleaner provided by the present invention, the number of the guide members is at least two, and the air flow guide assembly further includes a base plate, wherein the guide members are connected to or integrally formed with the base plate.

As a preferred solution of the vacuum cleaner provided by the present invention, the air flow guide assembly further includes a side enclosure plate, the vacuum cleaner further includes a top cover, the top cover is mounted above the side enclosure plate, the self-cleaning air inlet is opened on the top cover, the side enclosure plate is arranged circumferentially along a surface of the base plate facing away from the filtering device, and the top cover, the side enclosure plate and the base plate enclose to form a first pressure storage chamber; one end of the guide member is in fluid communication with the first pressure storage chamber, so that self-cleaning air in the first pressure storage chamber is guided to the second surface through the guide member.

As a preferred solution of the vacuum cleaner provided by the present invention, an upper surface of the base plate extends toward the top cover to form at least one support column, and the support column abuts against the top cover.

As a preferred solution of the vacuum cleaner provided by the present invention, the vacuum cleaner further includes a grid partition plate, the filtering device is installed below the grid partition plate, and the guide member penetrates through the grid partition plate and extends to the second surface of the filtering device.

As a preferred solution of the vacuum cleaner provided by the present invention, a side of the base plate facing the filtering device is provided with at least one positioning column, and the positioning column abuts against a grid bar of the grid partition plate.

As a preferred solution of the vacuum cleaner provided by the present invention, a positioning hole is provided at a position on the grid bar corresponding to the positioning column, the positioning hole is connected to the filtering device, the positioning column has a hollow structure, and the positioning column connects the self-cleaning air inlet and the filtering device.

As a preferred solution of the vacuum cleaner provided by the present invention, the positioning column is inserted into the positioning hole.

As a preferred solution of the vacuum cleaner provided by the present invention, a caliber of an opening of the guide member facing the filtering device gradually increases from a high-pressure side of the base plate to a low-pressure side.

The beneficial effects of the present invention are as follows:
The vacuum cleaner provided by the present invention includes a first air flow path, a second air flow path, a filtering device and an air flow guide assembly. The first air flow path is the air flow direction in the dust suction state of the vacuum cleaner, and the second air flow path is the air flow direction in the self-cleaning state of the vacuum cleaner. The air flow guide assembly is disposed at the intersection of the first air flow path and the second air flow path at the filtering device, and can guide the air from the self-cleaning air inlet to the second surface during the self-cleaning state, thereby increasing the flow rate of the self-cleaning air flow and effectively improving the self-cleaning effect.

### BRIEF DESCRIPTION OF THE DRAWINGS

In order to more clearly illustrate the technical solutions in the embodiments of the present invention, the following will briefly introduce the drawings needed for the description of the embodiments. Obviously, the drawings in the following description are only some embodiments of the present invention. For those of ordinary skill in the art, other drawings may be obtained based on the content of these embodiments of the present invention and these drawings without creative effort.
Fig. 1 is an exploded view of a vacuum cleaner provided by an embodiment of the present invention;
Fig. 2 is a first sectional view of a vacuum cleaner provided by an embodiment of the present invention;
Fig. 3 is a second sectional view of a vacuum cleaner provided by an embodiment of the present invention;
Fig. 4 is a partially enlarged view of the structure marked A in Fig. 3;
Fig. 5 is a top view of an air flow guide assembly provided by an embodiment of the present invention;
Fig. 6 is a structural schematic diagram of an air flow guide assembly provided by an embodiment of the present invention;
Fig. 7 is a side view of an air flow guide assembly provided by an embodiment of the present invention;
Fig. 8 is a partial structural schematic diagram of a grid partition plate provided by an embodiment of the present invention.

### Reference numerals:

1. machine head; 11. motor; 2. dust collection barrel; 3. filtering device;
100. air flow guide assembly; 110. base plate; 120. guide member; 130. top cover; 131. flip plate; 132. self-cleaning air inlet; 140. side enclosure plate; 150. first pressure storage chamber; 160. support column; 170. positioning column;
200. grid partition plate; 210. positioning hole.

### DETAILED DESCRIPTION

The following clearly and completely describes the technical solutions in the embodiments of the present invention with reference to the accompanying drawings in the embodiments of the present invention. Obviously, the described embodiments are only a part of the embodiments of the present invention, but not all of them. Based on the embodiments of the present invention, all other embodiments obtained by those of ordinary skill in the art without creative effort shall fall within the protection scope of the present invention.

In the description of the present invention, it should be noted that unless otherwise expressly specified and limited, the terms "connected", "connection", and "fixed" should be understood broadly. For example, it may be a fixed connection, a detachable connection, or an integral connection; it may be a mechanical connection or an electrical connection; it may be a direct connection or an indirect connection through an intermediary, and it may be an internal communication between two elements or an interaction relationship between two elements. For those of ordinary skill in the art, the specific meanings of the above terms in the present invention can be understood according to specific circumstances.

In the present invention, unless otherwise expressly specified and limited, that a first feature is "on" or "under" a second feature may include that the first and second features are in direct contact, or may include that the first and second features are not in direct contact but are contacted through another feature between them. Moreover, that the first feature is "on", "above", or "over" the second feature includes that the first feature is directly above and obliquely above the second feature, or merely indicates that the horizontal height of the first feature is higher than that of the second feature. That the first feature is "under", "below", or "beneath" the second feature includes that the first feature is directly below and obliquely below the second feature, or merely indicates that the horizontal height of the first feature is less than that of the second feature.

In the description of this embodiment, terms such as "upper", "lower", "right", "left", etc., indicating orientation or positional relationships are based on the orientation or positional relationships shown in the drawings. They are only for the convenience of describing the present invention and simplifying the operation, and do not indicate or imply that the referred device or element must have a specific orientation, be constructed and operated in a specific orientation. Therefore, they cannot be understood as limitations to the present invention. Furthermore, the terms "first" and "second" are used for descriptive purposes only and have no special meanings.

The embodiments of the present invention are described in detail below. Examples of the embodiments are shown in the drawings, wherein the same or similar reference numerals throughout denote the same or similar elements or elements having the same or similar functions. The embodiments described below with reference to the drawings are exemplary and are intended to explain the present invention, but should not be construed as limiting the present invention.

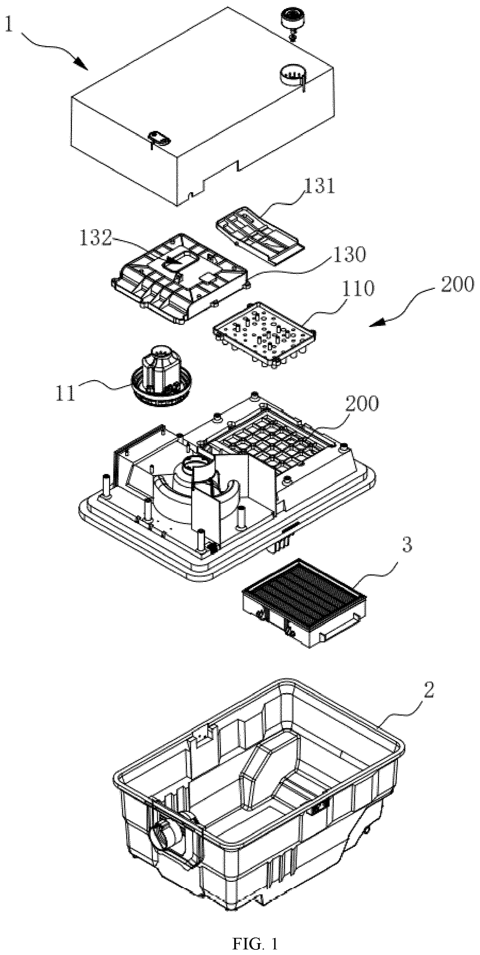

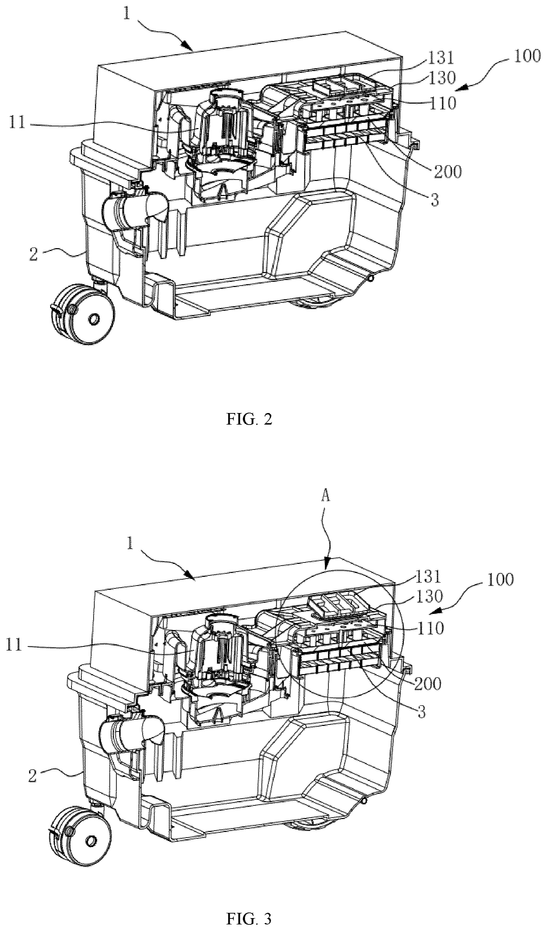

Referring to Fig. 1 - Fig. 3, this embodiment provides a vacuum cleaner. The vacuum cleaner includes a machine head 1 and a dust collection barrel 2. The machine head 1 is installed above the dust collection barrel 2. A suction port is opened on the side wall of the dust collection barrel 2, and this suction port is the dirty air inlet. A motor 11 and a filtering device 3 are arranged inside the machine head 1. The motor 11 can draw the air flow in the vacuum cleaner to the clean air outlet, and let it flow to the outside through the clean air outlet. A grid partition plate 200 is provided at the lower cover of the machine head 1. The filtering device 3 is installed below the grid partition plate 200, and the filtering device 3 is communicated with the inner cavity of the machine head 1.

Specifically, the filtering device 3 has opposite first and second surfaces. When the vacuum cleaner is in a normal placement state, the first surface is the lower surface of the filtering device 3, and the second surface is the upper surface of the filtering device.

More specifically, the vacuum cleaner has a dust suction state and a self-cleaning state. In the dust suction state, the air flow inside the vacuum cleaner flows according to the first air flow path. The first air flow path is that the air flow flows from the dirty air inlet to the clean air outlet. In the self-cleaning state, the dirty air inlet is closed, and the air flow inside the vacuum cleaner flows according to the second air flow path. The second air flow path is that the air flow flows from the self-cleaning air inlet 132 to the clean air outlet. The self-cleaning air inlet 132 is located in the inner cavity of the machine head 1 and is arranged above the grid partition plate 200.

Even more specifically, the air in the first air flow path enters the filtering device 3 from the first surface and flows out from the second surface of the filtering device 3, then flows through the motor 11 to the clean air outlet. The air in the second air flow path flows from the self-cleaning air inlet 132 to the second surface and enters the filtering device 3, flows out from the first surface of the filtering device 3, then circulates in the dust collection barrel 2, enters the filtering device 3 again from the first surface and flows out from the second surface of the filtering device 3, finally flows through the motor 11 and flows to the clean air outlet.

Referring to Fig. 1 - Fig. 4, the vacuum cleaner further includes an air flow guide assembly 100. The air flow guide assembly 100 is disposed at the intersection of the first air flow path and the second air flow path at the filtering device 3, located above the filtering device 3, and is configured to guide the air from the self-cleaning air inlet 132 to the second surface of the filtering device 3, thereby cleaning the filtering device 3.

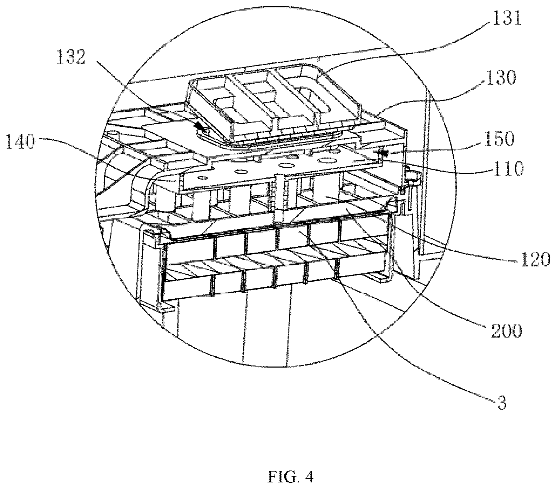

Referring to Fig. 4 - Fig. 7, the air flow guide assembly 100 includes a base plate 110, guide members 120, a top cover 130, and a side enclosure plate 140. The guide members 120 are arranged on the base plate 110, and the extending direction of the guide members 120 faces the filtering device 3. The side enclosure plate 140 is arranged circumferentially along a surface of the base plate 110 facing away from the guide members 120. The top cover 130 is mounted above the side enclosure plate 140. The top cover 130, the side enclosure plate 140 and the base plate 110 enclose to form a first pressure storage chamber 150. The air flow flowing in the second air flow path flows through the first pressure storage chamber 150. It should be noted that it is not limited that the air flow flowing in the first air flow path cannot flow into the first pressure storage chamber, but most of the air flow will eventually flow to the air inlet side of the motor 11, and flow from the air inlet side to the motor 11, and be drawn by the motor 11 to the clean air outlet. The self-cleaning air inlet 132 is opened on the top cover 130. Further, the self-cleaning air inlet 132 is opened at a position on the top cover 130 that can face the base plate 110.

Specifically, a flip plate 131 is provided on the top cover 130. The flip plate 131 is rotatably arranged at the self-cleaning air inlet 132 and can cover the self-cleaning air inlet 132 or open the self-cleaning air inlet 132. When the vacuum cleaner is in the dust suction state, the flip plate 131 covers the self-cleaning air inlet 132. At this time, the self-cleaning air inlet 132 is closed, and the air entering the dust collection barrel 2 from the dirty air inlet flows through the filtering device 3 and then through the motor 11, finally flowing to the clean air outlet. When the vacuum cleaner is in the self-cleaning state, the flip plate 131 is opened. The self-cleaning air can now enter the first pressure storage chamber 150 through the self-cleaning air inlet 132. The first pressure storage chamber 150 continuously intakes air, thereby increasing the air pressure in the first pressure storage chamber 150. One end of the guide member 120 facing the self-cleaning air inlet 132 is in fluid communication with the first pressure storage chamber 150, so that the self-cleaning air in the first pressure storage chamber 150 is guided to the second surface through the guide member 120. The self-cleaning gas from the first pressure storage chamber 150 can flow into the guide member 120 at a higher speed. In one embodiment, the aperture of the guide member 120 is smaller than that of the self-cleaning air inlet 132. According to Bernoulli's principle, the flow velocity of the self-cleaning air entering the guide member 120 from the first pressure storage chamber 150 will also be faster, thereby achieving the effect of injecting the self-cleaning air into the filtering device 3, resulting in a better self-cleaning degree.

More specifically, an upper surface of the base plate 110 facing away from the guide members 120 extends toward the top cover 130 to form at least one support column 160. The support column 160 can abut against the top cover 130. In this embodiment, there are a plurality of support columns 160. The plurality of support columns 160 are arranged in a rectangular array for supporting the top cover 130, preventing the top cover 130 from deforming downward due to pressure difference during operation, which would cause air leakage in the first pressure storage chamber 150 and affect the increase of air pressure in the first pressure storage chamber 150.

Optionally, the aforementioned support columns 160 can be arranged on positions of the base plate 110 without openings by connection or integrally formed; they can also be formed by extending upward from some openings on the base plate 110, thereby saving the arrangement position of the support columns 160.

More specifically, the guide member 120 is a columnar structure with a hollow interior and openings at both ends. It is arranged on a side of the base plate 110 facing the filtering device 3, penetrates through the grid partition plate 200, and extends to the second surface of the filtering device 3. The guide member 120 communicates with the first pressure storage chamber 150 and guides the high-pressure self-cleaning air flow in the first pressure storage chamber 150 to the second surface of the filtering device 3. Further, there are at least two guide members 120. The guide members 120 and the base plate 110 can be connected to each other by bonding, or integrally formed, making the manufacture simple and the connection between the guide members 120 and the base plate 110 more reliable.

Even more specifically, at least one positioning column 170 is provided on a side of the base plate 110 facing the filtering device 3. The positioning column 170 abuts against a grid bar of the grid partition plate 200. Through the above arrangement, the positioning column 170 can support the base plate 110 and provide a certain damping effect.

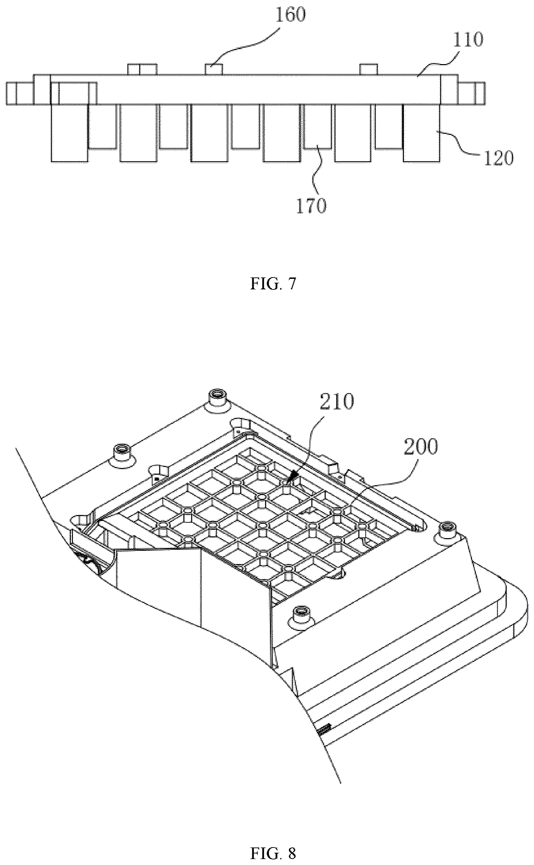

Preferably, referring to Fig. 8, a positioning hole 210 is provided at a position on the grid bar corresponding to the positioning column 170. The positioning column 170 is inserted into the positioning hole 210. Through the above arrangement, the positioning effect of the base plate 110 on the grid partition plate 200 can be further improved, preventing offset between the base plate 110 and the grid partition plate 200 during operation.

Specifically, the positioning hole 210 is connected to the filtering device 3. The positioning column 170 has a hollow structure. The positioning column 170 can connect the first pressure storage chamber 150 and the filtering device 3. Through the above arrangement, the positioning column 170 can also serve the guiding function for the self-cleaning air.

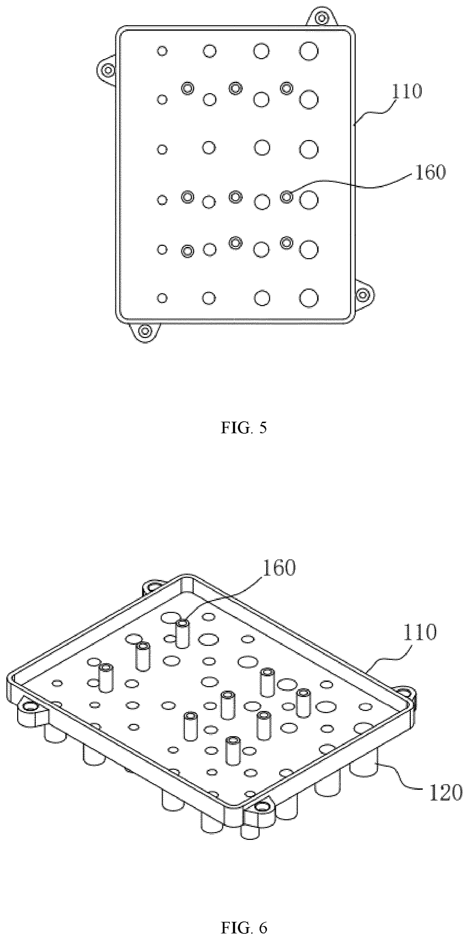

Preferably, since the self-cleaning air in the inner cavity of the machine head 1 will enter the through holes in the base plate 110 closer to the motor 11 more quickly, this causes uneven air intake among the multiple guide members 120 on the entire base plate 110, reducing the cleaning effect of the filtering device 3. Therefore, continuing to refer to Fig. 4 and Fig. 5, the caliber of the opening of the guide member 120 facing the filtering device 3 gradually increases from a high-pressure side of the base plate 110 to a low-pressure side. The high-pressure side is the side of the base plate 110 closer to the clean air outlet, and the low-pressure side is the side of the base plate 110 farther from the clean air outlet. Through the above arrangement, the air intake of the multiple guide members 120 can be made more uniform, optimizing the cleaning effect of the filtering device 3.

Obviously, the above embodiments of the present invention are only for clearly illustrating the present invention and are not intended to limit the embodiments of the present invention. For those of ordinary skill in the art, various obvious changes, readjustments, and substitutions can be made without departing from the protection scope of the present invention. There is no need and no way to exhaust all the embodiments. Any modifications, equivalent replacements, and improvements made within the spirit and principles of the present invention shall be included within the protection scope of the claims of the present invention.

## Claims

1. A vacuum cleaner, comprising:
a first air flow path flowing from a dirty air inlet to a clean air outlet;
a second air flow path flowing from a self-cleaning air inlet to the clean air outlet;
a filtering device having opposite first and second surfaces, wherein air in the first air flow path enters from the first surface and flows out from the second surface, then flows to the clean air outlet; air in the second air flow path enters from the second surface and flows out from the first surface, then enters again from the first surface and flows out from the second surface, then flows to the clean air outlet;
the vacuum cleaner further comprises:
an air flow guide assembly disposed at an intersection of the first air flow path and the second air flow path at the filtering device, configured to guide air from the self-cleaning air inlet to the second surface.

2. The vacuum cleaner according to claim 1, wherein the air flow guide assembly comprises a guide member, and the guide member has a hollow interior structure with openings at both ends.

3. The vacuum cleaner according to claim 2, wherein the number of the guide members is at least two, and the air flow guide assembly further comprises a base plate, wherein the guide members are connected to or integrally formed with the base plate.

4. The vacuum cleaner according to claim 3, wherein the air flow guide assembly further comprises a side enclosure plate, the vacuum cleaner further comprises a top cover, the top cover is mounted above the side enclosure plate, the self-cleaning air inlet is opened on the top cover, the side enclosure plate is arranged circumferentially along a surface of the base plate facing away from the filtering device, and the top cover, the side enclosure plate and the base plate enclose to form a first pressure storage chamber; one end of the guide member is in fluid communication with the first pressure storage chamber, so that self-cleaning air in the first pressure storage chamber is guided to the second surface through the guide member.

5. The vacuum cleaner according to claim 4, wherein an upper surface of the base plate extends toward the top cover to form at least one support column, and the support column abuts against the top cover.

6. The vacuum cleaner according to claim 3, wherein the vacuum cleaner further comprises a grid partition plate, the filtering device is installed below the grid partition plate, and the guide member penetrates through the grid partition plate and extends to the second surface of the filtering device.

7. The vacuum cleaner according to claim 6, wherein a side of the base plate facing the filtering device is provided with at least one positioning column, and the positioning column abuts against a grid bar of the grid partition plate.

8. The vacuum cleaner according to claim 7, wherein a positioning hole is provided at a position on the grid bar corresponding to the positioning column, the positioning hole is connected to the filtering device, the positioning column has a hollow structure, and the positioning column connects the self-cleaning air inlet and the filtering device.

9. The vacuum cleaner according to claim 8, wherein the positioning column is inserted into the positioning hole.

10. The vacuum cleaner according to claim 3, wherein a caliber of an opening of the guide member facing the filtering device gradually increases from a high-pressure side of the base plate to a low-pressure side.
